# EUROPÄISCHE PATENTSCHRIFT

(11) **EP 3 271 040 B1**
(45) Veröffentlichungstag und Bekanntmachung des Hinweises auf die Patenterteilung: **08.09.2021**
(21) Anmeldenummer: 16720984.0
(22) Anmeldetag: 17.03.2016
(51) Int. Cl.: B01D 24/00, B01D 24/24, E04H 4/16

(54) **FILTEREINRICHTUNG MIT TRENNPLATTE**
FILTERING DEVICE WITH SEPARATION PLATE
DISPOSITIF FILTRANTE AVEC PLATEAU DE SEPARATION

(30) Priorität: 19.03.2015 AT 502232015
(43) Veröffentlichungstag der Anmeldung: 24.01.2018
(73) Patentinhaber: Gruber, Egon, 8055 Graz (AT); Orgel-Zechner, René, 8430 Leibnitz (AT)
(72) Erfinder: GRUBER, Egon, 8055 Graz (AT); ORGEL-ZECHNER, René, 8430 Leibnitz (AT)
(74) Vertreter: KLIMENT & HENHAPEL
(86) Internationale Anmeldenummer: PCT/AT2016/050065
(87) Internationale Veröffentlichungsnummer: WO 2016/145471

(56) Entgegenhaltungen:
- WO-A1-97/40907
- WO-A2-2008/033584
- US-A- 4 102 790
- US-A- 4 295 965
- US-A- 6 090 284
- US-A1- 2007 175 832
- US-A1- 2012 187 053

## Beschreibung

Die Erfindung betrifft eine Filtereinrichtung mit einem Filtergehäuse für ein Filtermedium, wobei das Filtergehäuse einen Einlass für eine zu filternde Flüssigkeit und eine Ansaugöffnung für die gefilterte Flüssigkeit aufweist, gemäß dem Oberbegriff von Anspruch 1.

Filtereinrichtungen der genannten Art werden insbesondere für Aquarien, Schwimmteiche, Schwimmbecken oder Whirlpools eingesetzt. In herkömmlicher Weise finden dabei, wie in der US 4,102,790, der US 6,090,284 A, der US 2007/175832 A1 und der WO 97/40907 A beschrieben, vor allem Sandfilter oder Kartuschenfilter Einsatz. Weitere Filteranordnungen wurde in der WO 2008/033584 A2 und der US 4 295 965 beschrieben. Eine gattungsgemäße Filtereinrichtung wurde in der US 2012/187053 A1 beschrieben. Es wurde jedoch auch ein neues Filtermedium in Form von Fasermaterial vorgeschlagen. Dabei handelt es sich etwa um bällchenförmig verdichtete Kunststofffasern mit unterschiedlichen Oberflächenstrukturen und Querschnitten, die über hohe Aufnahmefähigkeit für Schmutzpartikel und Schwebeteilchen verfügen. Ein solches Filtermedium ermöglicht eine annähernd drucklose Filtration mit einem Druckverlust während der Filtration von wenigen Millibar. Ein Nachteil dieses Filtermediums besteht jedoch darin, dass es im Zuge der Anwendung leicht zu einer Pressung oder Verdichtung des Fasermaterials kommen kann, wodurch die Tiefenfilterwirkung deutlich herabgesetzt werden kann. Das Filtermedium wird in weiterer Folge zu einem Flächenfilter mit geringer Aufnahmefähigkeit verdichtet und muss vergleichsweise rasch getauscht werden.

Es ist daher das Ziel der Erfindung eine Filtereinrichtung bereitzustellen, das einen sicheren Betrieb unter Einsatz eines aus Fasermaterial gebildeten Filtermediums ermöglicht und die Verwendungsdauer dieses Filtermediums verlängert.

Dieses Ziel wird durch die Merkmale von Anspruch 1 erreicht. Anspruch 1 bezieht sich auf eine Filtereinrichtung mit einem Filtergehäuse für ein Filtermedium, wobei das Filtergehäuse einen Einlass für eine zu filternde Flüssigkeit und eine Ansaugöffnung für die gefilterte Flüssigkeit aufweist, und das Filtergehäuse mittels einer inneren Trennplatte, die mit Durchtrittsöffnungen für die Flüssigkeit versehen ist, in eine ansaugseitige Vorkammer und eine den Einlass aufweisende einlassseitige Filterkammer unterteilt wird, wobei die Vorkammer einen im Vergleich zur Ansaugöffnung erweiterten oder einen sich von der Ansaugöffnung zur Trennplatte erweiternden Querschnitt aufweist, und die Ansaugöffnung zur Sicherstellung einer Sogwirkung in der Ansaugöffnung mit einer Pumpe verbindbar ist, wobei eine, eine Flüssigkeitsströmung vom Einlass zur Ansaugöffnung bewirkende Sogstrecke mit einem sich über die Vorkammer und die Durchtrittsöffnungen der Trennplatte in die Filterkammer und von dort zum Einlass der Filterkammer zum Ansaugen der zu filternden Flüssigkeit vom Außenraum des Filtergehäuses fortpflanzenden Sog vorgesehen ist. Erfindungsgemäß wird vorgeschlagen, dass die Filterkammer mit einem aus Fasermaterial gebildeten Filtermedium befüllt ist, und die Durchtrittsöffnungen der Trennplatte mithilfe einer gelocht ausgeführten Trennplatte verwirklicht sind, wobei es sich bei dem Fasermaterial um bällchenförmige Polyesterfasern handelt, die jeweils größer als die Durchtrittsöffnungen der Trennplatte sind.

Die Filterkammer bildet hierbei eine sichere und formstabile Aufnahme für das Fasermaterial. Die Ansaugöffnung ist mit einer Pumpe verbunden, die eine Sogwirkung in der Ansaugöffnung sicherstellt und eine Flüssigkeitsströmung innerhalb des Filtergehäuses vom Einlass zur Ansaugöffnung bewirkt. Um den Strömungsdruck auf das Fasermaterial zu verringern und das Fasermaterial schonend mit der zu filternden und innerhalb des Filtergehäuses vom Einlass zur Ansaugöffnung strömenden Flüssigkeit zu umspülen ist ferner eine ansaugseitige Vorkammer vorgesehen, die einen im Vergleich zur Ansaugöffnung erweiterten oder einen sich von der Ansaugöffnung zur Trennplatte erweiternden Querschnitt aufweist. Die Sogwirkung der Ansaugöffnung wird im Filtergehäuse auf diese Weise verringert. Der reduzierte Sog pflanzt sich in weiterer Folge über die Vorkammer und die Durchtrittsöffnungen der Trennplatte in die Filterkammer und von dort zum Einlass der Filterkammer fort, wo die zu filternde Flüssigkeit vom Außenraum des Filtergehäuses angesaugt wird. Hierfür sind etwa den Einlass bildende Einlassöffnungen in einer Abdeckung der Filterkammer vorgesehen, durch die die zu filternde Flüssigkeit in die Filterkammer gesaugt wird, wo es das aus Fasermaterial gebildete Filtermedium durchströmt. Die Abdeckung ist vorzugsweise abnehmbar ausgeführt, sodass das Filtermedium bei Bedarf ausgetauscht werden kann.

Die Trennplatte kann etwa so ausgeführt sein, dass sie in das Filtergehäuse einsetzbar ist und sich über Abstandshalter an der Bodenplatte des Filtergehäuses abstützt. Gemäß einer weiteren Ausführungsform kann aber auch vorgesehen sein, dass die Trennplatte eine mit Durchtrittsöffnungen versehene Deckfläche für ein in die Ansaugöffnung mündendes und die Vorkammer querendes Rohrstück bildet, das sich an der Bodenplatte abstützt und dessen Mantelfläche in die Vorkammer mündende Durchbrüche aufweist. In diesem Fall stellt das Rohrstück den Abstandshalter für die Trennplatte dar. Die Filterkammer mit dem Filtermedium ist somit über das Rohrstück mit der Ansaugöffnung verbunden, sodass die zu filternde Flüssigkeit von der Ansaugöffnung über das Rohrstück und die Durchtrittsöffnungen der Deckfläche aus der Filterkammer gesaugt wird. Da aber die Mantelfläche des Rohrstückes mit Durchbrüchen versehen ist, wird die gefilterte Flüssigkeit auch über außerhalb der Deckfläche liegende Durchtrittsöffnungen der Trennplatte in die Vorkammer gesaugt. Der in der Filterkammer bestehende Ansaugdruck wird somit wiederum verringert, allerdings erweitert sich die Ansaugöffnung nicht sprunghaft auf den Querschnitt der Vorkammer, sondern setzt sich zunächst weitestgehend unverändert im Rohrstück fort, wobei die Durchbrüche in der Mantelfläche des Rohrstückes einen in axialer Richtung kontinuierlich abnehmenden Strömungsdruck sicherstellen.

Es wäre aber auch denkbar, die Vorkammer kegelstumpfförmig mit einem sich von der Ansaugöffnung zur Trennplatte erweiternden Querschnitt auszuführen. Auch auf diese Weise kann ein in axialer Richtung kontinuierlich abnehmender Strömungsdruck erreicht werden.

Um die Strömungsverhältnisse zu optimieren und einen besonders einfachen Aufbau zu ermöglichen wird vorzugsweise eine rotationssymmetrische Ausführung vorgeschlagen, indem das Filtergehäuse zylindrisch ausgeführt ist und die Trennplatte als Einsatzscheibe ausgeführt ist, die das Filtergehäuse in eine zylindrische Vorkammer und eine zylindrische Filterkammer unterteilt, wobei die Ansaugöffnung in einer Bodenplatte des Filtergehäuses angeordnet ist und der Einlass auf der der Bodenplatte abgewandten Seite der Filterkammer angeordnet ist. Falls für eine solche rotationssymmetrische Ausführung ein eingesetztes Rohrstück verwendet wird, verläuft das Rohrstück vorzugsweise koaxial zur Zylinderachse des Filtergehäuses.

Die Erfindung wird in weiterer Folge anhand von Ausführungsbeispielen mithilfe der beiliegenden Figuren näher erläutert. Es zeigen hierbei die
Fig. 1 eine perspektivische Ansicht einer Ausführungsform einer erfindungsgemäßen Filtereinrichtung,
Fig. 2 eine Seitenansicht der Ausführungsform gemäß der Fig. 1 mit eingezeichneter Schnittebene A-A,
Fig. 3 eine Schnittansicht gemäß der Schnittebene A-A der Fig. 2 ohne Filtermedium,
Fig. 4 eine perspektivische Ansicht der Trennplatte für eine Ausführungsform gemäß der Fig. 1-3,
Fig. 5 eine Seitenansicht der Trennplatte gemäß der Fig. 4,
Fig. 6 eine perspektivische Schnittansicht einer weiteren Ausführungsform einer erfindungsgemäßen Filtereinrichtung ohne Filtermedium,
Fig. 7 eine perspektivische Schnittansicht der Filtereinrichtung gemäß der Fig. 6 mit Filtermedium, und die
Fig. 8 eine Schnittansicht der Filtereinrichtung gemäß der Fig. 7.

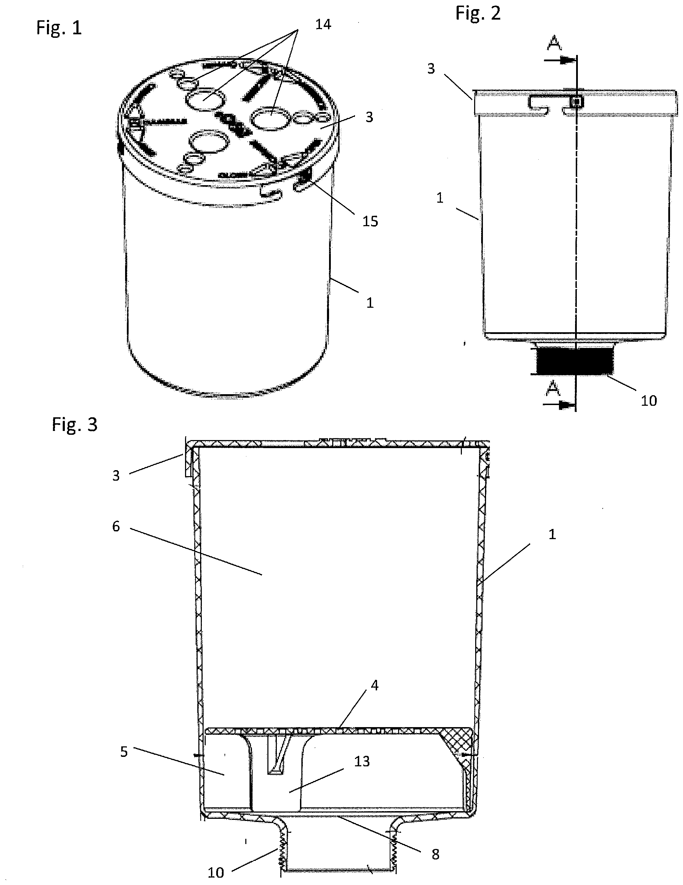

Anhand der Fig. 1 bis 5 wird zunächst eine erste Ausführungsform einer erfindungsgemäßen Filtereinrichtung erläutert. In der gezeigten Ausführung ist das Filtergehäuse 1 zylindrisch ausgeführt und weist eine Abdeckung 3 auf, die mit Einlassöffnungen 14 versehen ist. Die Einlassöffnungen 14 bilden den Einlass des Filtergehäuses 1 und können in Form, Anzahl und Größe variieren. Die Abdeckung 3 ist mithilfe einer Verschlussvorrichtung 15 vorzugsweise abnehmbar ausgeführt, sodass das innerhalb des Filtergehäuses 1 befindliche Filtermedium 2 bei Bedarf ausgetauscht werden kann. Die Fig. 2 zeigt eine Seitenansicht des Filtergehäuses 1, wobei der Anschlussflansch 10 der erfindungsgemäßen Filtereinrichtung ersichtlich ist, der sich an der der Abdeckung 3 abgewandten Seite des Filtergehäuses 1 befindet. An den Anschlussflansch 10 kann eine Pumpe angeschlossen werden, die die gefilterte Flüssigkeit absaugt. Der Anschlussflansch 10 kann hierfür etwa mit einem Außengewinde versehen sein.

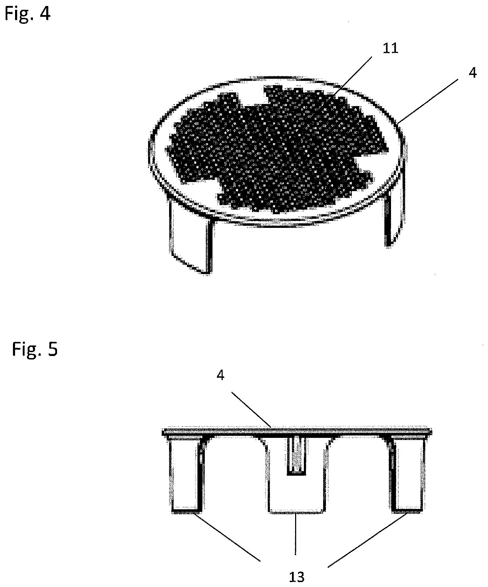

Die Fig. 3 zeigt eine Schnittansicht gemäß der Schnittebene A-A der Fig. 2 ohne Filtermedium. Im Inneren des Filtergehäuses 1 ist eine Trennplatte 4 angeordnet, die scheibenförmig ausgeführt ist und am inneren Gehäusemantel dicht anliegt. Die Trennplatte 4 ist in das Filtergehäuse 1 einsetzbar und weist von der Trennplatte 4 abstehende Abstandshalter 13 auf, wie insbesondere auch in den Fig. 4 und 5 ersichtlich ist. Die Fig. 4 zeigt eine perspektivische Ansicht der Trennplatte 4 für eine Ausführungsform gemäß der Fig. 1-3, und die Fig. 5 eine Seitenansicht der Trennplatte gemäß der Fig. 4. Mithilfe der Abstandshalter 13 stützt sich die in das Filtergehäuse 1 eingesetzte Trennplatte 4 von einer Bodenplatte 7 des Filtergehäuses 1 ab. Auf diese Weise wird der Innenraum des Filtergehäuses 1 in eine ansaugseitige Vorkammer 5 und eine einlassseitige Filterkammer 6 unterteilt. In der Filterkammer 6 befindet sich das Filtermedium in Form von lose eingelegtem Fasermaterial 2, das in der Fig. 3 nicht eingezeichnet ist.

Der an der Bodenplatte 7 angeordnete Anschlussflansch 10 mündet über eine Ansaugöffnung 8 in die Vorkammer 5. Der Strömungsdruck der zu filternden Flüssigkeit durch die erfindungsgemäße Filtereinrichtung wird wie bereits erwähnt über eine Pumpe erzeugt, die in den Fig. 1-8 nicht dargestellt ist. Der mithilfe der Pumpe in der Ansaugöffnung 8 erzeugte Sog pflanzt sich in weiterer Folge über die Vorkammer 5 und die Durchtrittsöffnungen 11 der Trennplatte 4 in die Filterkammer 6 und von dort zum Einlass der Filterkammer 6 fort, wo die zu filternde Flüssigkeit vom Außenraum des Filtergehäuses 1 angesaugt wird. Hierfür sind den Einlass bildende Einlassöffnungen 14 in einer Abdeckung 3 der Filterkammer 6 vorgesehen, durch die die zu filternde Flüssigkeit in die Filterkammer 6 gesaugt wird, wo es das aus Fasermaterial 2 gebildete Filtermedium durchströmt.

Im Zuge des Betriebes der erfindungsgemäßen Filtereinrichtung strömt die zu filternde Flüssigkeit zunächst über die Einlassöffnungen 14 in die Filterkammer 6. Nach dem Durchtritt der zu filternden Flüssigkeit durch das Filtermedium der Filterkammer 6 verlässt die gefilterte Flüssigkeit in weiterer Folge die Filterkammer 6 über die Durchtrittsöffnungen 11 der Trennplatte 4 und gelangt in die Vorkammer 5. Die in der Vorkammer 5 gesammelte und gefilterte Flüssigkeit verlässt schließlich über die Ansaugöffnung 8 das Filtergehäuse 1. Der Strömungsdruck nimmt beim Übertritt von der Vorkammer 5 in die Ansaugöffnung 8 aufgrund des sich verengenden Querschnittes stark zu. Diese Zunahme bleibt jedoch ohne nachteilige Auswirkungen auf das Fasermaterial 2, da es mithilfe der Trennplatte 4 von diesem Bereich ferngehalten wird. Mit anderen Worten verringert die Vorkammer 5 den Strömungsdruck auf das in der Filterkammer 6 befindliche Fasermaterial 2, da sich der Strömungsquerschnitt aufgrund des im Vergleich zur Ansaugöffnung 8 erweiterten Querschnitts der Vorkammer 5 vergrößert. Das Fasermaterial 2 wird somit schonend mit der zu filternden Flüssigkeit umspült.

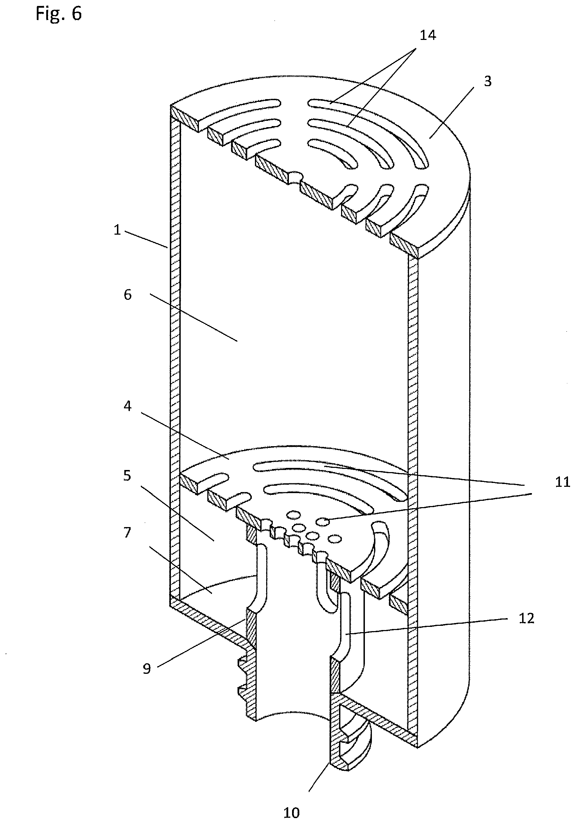

Anhand der Fig. 6 bis 8 wird eine zweite Ausführungsform der erfindungsgemäßen Filtereinrichtung erläutert. Wiederum ist eine Trennplatte 4 vorgesehen, die als Trennscheibe ausgeführt ist und am inneren Gehäusemantel des zylindrisch ausgeführten Filtergehäuses 1 dicht anliegt. Auf diese Weise wird das Filtergehäuse 1 wiederum in eine Vorkammer 5 und eine Filterkammer 6 unterteilt, die ebenfalls jeweils zylindrisch sind. In einer Bodenplatte 7 des Filtergehäuses 1 befindet sich eine Ansaugöffnung 8 für die zu filternde Flüssigkeit. Die Ansaugöffnung 8 mündet jedoch in ein Rohrstück 9, das innerhalb der Vorkammer 5 angeordnet ist und die Vorkammer 5 quert, wobei es sich an der Bodenplatte 7 abstützt. Das Rohrstück 9 weist in der gezeigten Ausführungsform einen Querschnitt auf, der jenem der Ansaugöffnung 8 im Wesentlichen entspricht, es könnte jedoch auch so ausgeführt sein, dass es einen sich von der Ansaugöffnung 8 zur Trennplatte 4 erweiternden Querschnitt aufweist. Die der Ansaugöffnung 8 abgewandte Mündung des Rohrstückes 9 wird von der Trennplatte 4 abgedeckt. Die Trennplatte 4 bildet somit eine Deckfläche für das Rohrstück 9, weist aber auch in diesem Bereich Durchtrittsöffnungen 11 auf, über die die gefilterte Flüssigkeit von der Filterkammer 6 in das Rohrstück 9 fließen kann. Die Mantelfläche des Rohrstückes 9 weist ferner Durchbrüche 12 auf, über die gefilterte Flüssigkeit von der Vorkammer 5 in das Rohrstück 9 und somit weiter zur Ansaugöffnung 8 fließen kann. Die Durchbrüche 12 in der Mantelfläche des Rohrstückes 9 sind im gezeigten Ausführungsbeispiel als axial verlaufende Schlitze ausgeführt, sie können in Form, Anzahl und Größe aber auch anders ausgeführt werden, um die Strömungs- und Druckverhältnisse jeweils zu optimieren. Die in der Filterkammer 6 befindliche Flüssigkeit kann auch über außerhalb der Deckfläche liegende Durchtrittsöffnungen 11 der Trennplatte 4 in die Vorkammer 5 fließen. Das Rohrstück 9 stellt eine Beabstandung der Trennplatte 4 von der Bodenplatte 7 sicher und könnte auch an der Trennplatte 4 angeformt sein, sodass ein Einsatzkörper gebildet wird, der sich über das Rohrstück 9 an der Bodenplatte 7 abstützt.

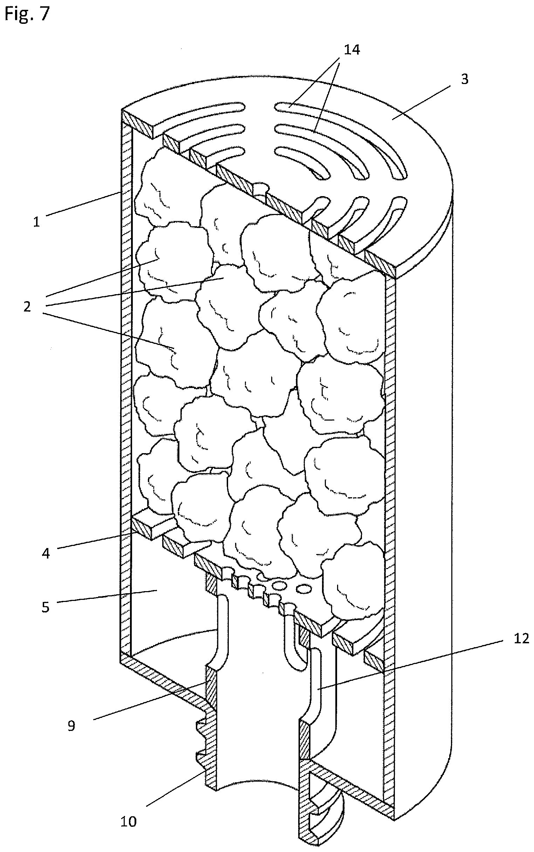

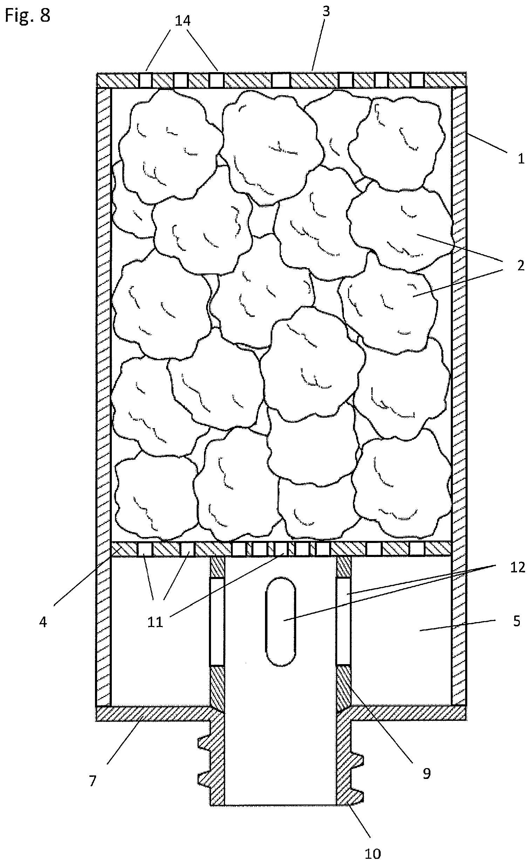

In der Ausführungsform gemäß der Fig. 1 bis 5 sowie gemäß der Fig. 6 bis 8 dient die Filterkammer 6 jeweils der Aufnahme des aus Fasermaterial 2 gebildeten Filtermediums, wie anhand der Fig. 7 und 8 ersichtlich ist. Im gezeigten Beispiel handelt es sich beim Fasermaterial 2 etwa um bällchenförmig verdichtete Polyesterfasern.

Im Zuge des Betriebes der erfindungsgemäßen Filtereinrichtung strömt die zu filternde Flüssigkeit über die Einlassöffnungen 14 in die Filterkammer 6. Nach dem Durchtritt der zu filternden Flüssigkeit durch das Filtermedium der Filterkammer 6 verlässt die gefilterte Flüssigkeit in weiterer Folge die Filterkammer 6 über die Durchtrittsöffnungen 11 der Trennplatte 4 und gelangt entweder direkt in das Rohrstück 9, oder über außerhalb der Deckfläche des Rohrstückes 9 liegende Durchtrittsöffnungen 11 in die Vorkammer 5, von wo es über die Durchbrüche 12 in das Rohrstück 9 fließt. Der Sog innerhalb des Rohrstückes 9 wird auf diese Weise von der Ansaugöffnung 8 zur Trennplatte 4 kontinuierlich verringert, eine sprunghafte Verringerung des Strömungsdruckes wird jedoch vermieden. Wiederum wird der Strömungsdruck auf das Fasermaterial 2 verringert, sodass das Fasermaterial 2 schonend mit der zu filternden Flüssigkeit umspült wird.

Die Filterkammer 6 ermöglicht eine sichere und formstabile Aufnahme für das Fasermaterial 2, wobei mithilfe der erfindungsgemäßen Ausführung die Gefahr einer Pressung und Verdichtung des Filtermediums verringert wird. Die erfindungsgemäße Filtereinrichtung ermöglicht somit einen sicheren Betrieb unter Einsatz eines aus Fasermaterial 2 gebildeten Filtermediums mit verlängerter Verwendungsdauer des Filtermediums.

### Bezugszeichenliste:

- 1: Filtergehäuse
- 2: Fasermaterial
- 3: Abdeckung
- 4: Trennplatte
- 5: Vorkammer
- 6: Filterkammer
- 7: Bodenplatte
- 8: Ansaugöffnung
- 9: Rohrstück
- 10: Anschlussflansch
- 11: Durchtrittsöffnungen
- 12: Durchbrüche
- 13: Abstandshalter
- 14: Einlassöffnungen
- 15: Verschlussvorrichtung

## Patentansprüche

1. Filtereinrichtung mit einem Filtergehäuse (1) für ein Filtermedium, wobei das Filtergehäuse (1) einen Einlass für eine zu filternde Flüssigkeit und eine Ansaugöffnung (8) für die gefilterte Flüssigkeit aufweist, und das Filtergehäuse (1) mittels einer inneren Trennplatte (4), die mit Durchtrittsöffnungen (11) für die Flüssigkeit versehen ist, in eine ansaugseitige Vorkammer (5) und eine den Einlass aufweisende einlassseitige Filterkammer (6) unterteilt wird, wobei die Vorkammer (5) einen im Vergleich zur Ansaugöffnung (8) erweiterten oder einen sich von der Ansaugöffnung (8) zur Trennplatte (4) erweiternden Querschnitt aufweist, und die Ansaugöffnung (8) zur Sicherstellung einer Sogwirkung in der Ansaugöffnung (8) mit einer Pumpe verbindbar ist, wobei eine, eine Flüssigkeitsströmung vom Einlass zur Ansaugöffnung bewirkende Sogstrecke mit einem sich über die Vorkammer (5) und die Durchtrittsöffnungen (11) der Trennplatte (4) in die Filterkammer (6) und von dort zum Einlass der Filterkammer (6) zum Ansaugen der zu filternden Flüssigkeit vom Außenraum des Filtergehäuses (1) fortpflanzenden Sog vorgesehen ist, **dadurch gekennzeichnet, dass** die Filterkammer (6) mit einem aus Fasermaterial (2) gebildeten Filtermedium befüllt ist, und die Durchtrittsöffnungen (11) der Trennplatte (4) mithilfe einer gelocht ausgeführten Trennplatte (4) verwirklicht sind, wobei es sich bei dem Fasermaterial (2) um bällchenförmige verdichtete Polyesterfasern handelt, die jeweils größer als die Durchtrittsöffnungen (11) der Trennplatte (4) sind.

2. Filtereinrichtung nach Anspruch 1, **dadurch gekennzeichnet, dass** die Trennplatte (4) eine mit Durchtrittsöffnungen (11) versehene Deckfläche für ein in die Ansaugöffnung (8) mündendes und die Vorkammer (5) querendes Rohrstück (9) bildet, das sich an der Bodenplatte (7) abstützt und dessen Mantelfläche in die Vorkammer (5) mündende Durchbrüche (12) aufweist.

3. Filtereinrichtung nach Anspruch 1 oder 2, **dadurch gekennzeichnet, dass** das Filtergehäuse (1) zylindrisch ausgeführt ist und die Trennplatte (4) als Einsatzscheibe ausgeführt ist, die das Filtergehäuse (1) in eine zylindrische Vorkammer (5) und eine zylindrische Filterkammer (6) unterteilt, wobei die Ansaugöffnung (8) in einer Bodenplatte (7) des Filtergehäuses (1) angeordnet ist und der Einlass auf der der Bodenplatte (7) abgewandten Seite der Filterkammer (6) angeordnet ist.

## Claims

1. Filter device, comprising a filter housing (1) for a filter medium, wherein the filter housing (1) has an inlet for a liquid to be filtered and a suction opening (8) for the filtered liquid, and the filter housing (1) is divided by means of an inner separating plate (4), which is provided with passage openings (11) for the liquid, into an inlet-side pre-chamber (5) and an inlet-side filter chamber (6) having the inlet, wherein the pre-chamber (5) has a cross-section widened in comparison with the suction opening (8) or a cross-section widening from the suction opening (8) to the separating plate (4), and the suction opening (8) can be connected to a pump to ensure a suction effect in the suction opening (8), wherein a suction section effecting a liquid flow from the inlet to the suction opening is provided having a suction propagating via the pre-chamber (5) and the passage openings (11) of the separating plate (4) into the filter chamber (6) and from there to the inlet of the filter chamber (6) for sucking in the liquid to be filtered from the outer space of the filter housing (1), **characterized in that** the filter chamber (6) is filled with a filter medium formed from fiber material (2), and the passage openings (11) of the separating plate (4) are realized with the aid of a perforated separating plate (4), wherein the fiber material (2) is compressed polyester fibers in the form of small balls, each of which is larger than the passage openings (11) of the separating plate (4).

2. Filter device according to claim 1, **characterized in that** the separating plate (4) forms a cover surface, provided with passage openings (11), for a tube piece (9) which opens into the suction opening (8) and crosses the pre-chamber (5) and which is supported on the base plate (7) and whose jacket surface has apertures (12) opening into the pre-chamber (5).

3. Filter device according to claim 1 or 2, **characterized in that** the filter housing (1) is of cylindrical design and the separating plate (4) is designed as an insert disk which subdivides the filter housing (1) into a cylindrical pre-chamber (5) and a cylindrical filter chamber (6), wherein the suction opening (8) is arranged in a base plate (7) of the filter housing (1) and the inlet is arranged on the side of the filter chamber (6) facing away from the base plate (7).

## Revendications

1. Installation de filtration avec un corps de filtre (1) pour une matière à filtrer, dans laquelle le corps de filtre (1) possède une entrée pour un liquide à filtrer et une ouverture d'aspiration (8) pour le liquide filtré, et le corps de filtre (1) est divisé, au moyen d'une plaque de séparation intérieure (4) munie d'ouvertures de passage (11) pour le liquide, en une préchambre (5) du côté de l'aspiration et une chambre de filtration (6) comportant l'entrée du côté de l'entrée, la préchambre (5) ayant une section élargie par rapport à l'ouverture d'aspiration (8) ou une section s'élargissant de l'ouverture d'aspiration (8) vers la plaque de séparation (4), et l'ouverture d'aspiration (8) peut être raccordée à une pompe pour produire un effet d'aspiration dans l'ouverture d'aspiration (8), un trajet d'aspiration étant prévu pour créer un écoulement de liquide de l'entrée vers l'ouverture d'aspiration avec une aspiration qui se propage depuis l'extérieur dans la chambre de filtration (6) en passant par la préchambre (5) et les ouvertures de passage (11) de la plaque de séparation (4) et de là à l'entrée de la chambre de filtration (6) pour aspirer le liquide à filtrer depuis l'extérieur du corps de filtre (1), **caractérisée en ce que** la chambre de filtration (6) est remplie d'une matière à filtrer formée d'un matériau fibreux (2) et les ouvertures de passage (11) de la plaque de séparation (4) sont réalisées à l'aide d'une plaque de séparation (4) perforée, le matériau fibreux (2) étant composé de fibres de polyester comprimées sous forme de billes dont chacune est plus grosse que les ouvertures de passage (11) de la plaque de séparation (4).

2. Installation de filtration selon la revendication 1, **caractérisée en ce que** la plaque de séparation (4) forme une surface de couverture munie d'ouvertures de passage (11) pour un tuyau (9) débouchant dans l'ouverture d'aspiration (8) et traversant la préchambre (5), qui s'appuie sur la plaque de fond (7) et dont la surface d'enveloppe présente des percées (12) qui débouchent dans la préchambre (5).

3. Installation de filtration selon la revendication 1 ou 2, **caractérisée en ce que** le corps de filtre (1) a une forme cylindrique et la plaque de séparation (4) est réalisée comme un disque inséré qui divise le corps de filtre (1) en une préchambre (5) cylindrique et une chambre de filtration (6) cylindrique, l'ouverture d'aspiration (8) étant disposée dans une plaque de fond (7) du corps de filtre (1) et l'entrée étant disposée sur le côté de la chambre de filtration (6) opposé à la plaque de fond (7).
